# FASCICULE DE BREVET EUROPEEN

(11) **EP 2 712 125 B1**
(45) Date de publication et mention de la délivrance du brevet: **25.03.2015**
(21) Numéro de dépôt: 13306220.8
(22) Date de dépôt: 05.09.2013
(51) Int. Cl.: H04L 12/40, H04L 12/10, H04L 12/28

(54) **Alimentation électrique à partir du bus pour un dispositif domotique**
Stromversorgung einer Heimautomatisierungsvorrichtung über einen Bus
Power supply for a home automation drawing its energy from the bus

(30) Priorité: 25.09.2012 FR 1258960
(43) Date de publication de la demande: 26.03.2014
(73) Titulaire: HAGER CONTROLS (Société par Actions Simplifiée), 67700 Saverne (FR)
(72) Inventeur: Jost, Sébastien, 67700 MONSWILLER (FR); Paillard, Jean Noël, 67190 MUTZIG (FR)
(74) Mandataire: Nuss, Laurent

(56) Documents cités:
- WO-A1-2011/085703
- US-A1- 2006 271 678

## Description

La présente invention relève du domaine des équipements électriques pour installation domotique, et a plus particulièrement pour objet un procédé de recharge électrique pour un module domotique, ainsi qu'un module domotique le mettant en oeuvre.

Un réseau filaire domotique prend la forme d'un bus deux fils, entre lesquels s'installe une tension d'environ 20 à 30 volts, cette tension pouvant changer en fonction de l'éloignement par rapport à la source de tension, mais aussi, dans le temps, en fonction des signaux véhiculés sur le bus.

Ainsi, les équipements domotiques connectés à ce bus d'information en tirent généralement au moins une partie, voire la totalité, de l'énergie nécessitée par leur fonctionnement. Cette énergie est généralement utilisée pour le fonctionnement des différents composants du module domotique : processeur, relais ou autres, point de connexion permettant la connexion et l'interface avec le bus pour l'envoi et/ou la réception de signal et/ou de puissance, moyen d'interface homme machine, sous forme de diodes généralement, voire d'un écran d'affichage, etc. Avec ce type d'équipements, il est particulièrement important d'optimiser la façon avec laquelle l'énergie est extraite du bus, sans pour autant en perturber le fonctionnement. Naturellement, l'énergie extraite est bien souvent stockée dans une réserve, du type capacité.

Dans ce domaine, WO 2007/003254 divulgue un circuit électrique de connexion d'un module domotique à un bus. Il comprend un circuit de contrôle de tension, pour fournir une capacité, ainsi qu'un circuit permettant de limiter le courant tiré du bus lorsqu'un signal est véhiculé, ce circuit limitant le courant étant alors temporairement connecté par l'unité de transmission à l'aide d'un contact piloté. Il n'est cependant pas possible de tenir compte de l'éventuelle perte de tension qui s'observe entre la source de tension et le module, cette baisse étant d'autant plus grande que le module est éloigné de la source.

FR 2 876 512 divulgue un module domotique, comprenant, pour tirer toute son alimentation à partir du bus, d'une part, un filtre d'interface, constitué essentiellement d'un circuit de limitation de courant et d'un circuit de dérivation de courant montés en parallèle, et, d'autre part, un bloc d'alimentation permettant de réguler la tension.

WO2011/085703 divulgue un schéma électrique d'alimentation où le point de fonctionnement du bloc d'alimentation, tirant l'énergie du bus, peut être modifié par un signal véhiculé sur le bus.

EP 1 928 120 propose d'alimenter le module domotique à partir du bus à l'aide, d'une part, d'un dépolariseur de bus, et, d'autre part, d'une source de tension ajustable, cette dernière permettant essentiellement de réguler la tension fournie à l'unité de traitement.

Enfin, EP 2 372 564 divulgue un module domotique dont le processeur tire son énergie du bus grâce à la succession d'un étage de protection contre les surtensions et les inversions de polarité, d'un étage d'adaptation d'impédance stabilisant la tension, d'un étage d'alimentation à haut rendement, et enfin d'un étage de commutation franche à un niveau de tension prédéfinie, en l'occurrence 3,3 Volts compatibles avec le processeur.

Il existe cependant des inconvénients dans ce genre de réalisation, concernant essentiellement l'optimisation de la recharge de la réserve d'énergie nécessaire au bon fonctionnement du module domotique, cette recharge devant bien entendu être la plus rapide possible, en particulier pour le premier démarrage. En effet, comme il a déjà été dit, la tension disponible varie en fonction de l'éloignement de la source de tension. En outre, l'énergie tirée du bus est utilisée par l'appareil domotique tant pour son fonctionnement, à savoir pilotage de relais, calcul par le processeur, affichage, connexion, etc., que pour accumuler de l'énergie pour les périodes où l'énergie disponible sur le bus ne suffit pas instantanément, et l'accumulation ne peut naturellement pas se faire au détriment du fonctionnement du module lui-même. Enfin, la ponction d'énergie sur le bus doit impérativement se faire sans perturber le bus, et donc sans modifier la qualité du signal véhiculé.

Se limiter à la conception d'un circuit d'alimentation dimensionné pour satisfaire l'ensemble de ces contraintes à partir des conditions électriques les moins favorables n'est pas suffisant, puisque dès lors que les conditions deviennent plus favorables, la recharge ne sera plus maximale.

La présente invention a pour but de pallier au moins une partie et préférentiellement tous ces inconvénients, et vise ainsi à améliorer la recharge électrique d'un module domotique à partir du bus en augmentant le courant de charge dès lors que la tension du bus augmente.

A cet effet, l'invention a pour objet un procédé d'alimentation électrique d'un module domotique, comprenant un point de connexion à un réseau filaire d'information bus, une réserve d'énergie électrique rechargeable pour son fonctionnement ainsi qu'un ensemble d'éléments consommateurs électriques, ladite alimentation électrique se faisant à partir du bus, ledit procédé comprenant
une étape consistant essentiellement à fournir de l'énergie électrique pour le fonctionnement du module domotique ainsi qu'
une étape consistant essentiellement à produire un courant de charge à partir d'une énergie électrique disponible sur le bus pour une accumulation dans la réserve d'énergie, ladite réserve fournissant ultérieurement tout ou partie de l'énergie nécessaire au fonctionnement du module domotique.

Ce procédé est **caractérisé en ce** que
le courant de charge, fourni instantanément à la réserve d'énergie lors de l'accumulation, augmente avec la tension disponible sur le bus.

L'invention a aussi pour objet un module domotique comprenant un point de connexion à un réseau filaire d'information bus, une réserve d'énergie électrique rechargeable pour son fonctionnement ainsi qu'un ensemble d'éléments consommateurs électriques.

Ce module est **caractérisé en ce** que
il comprend, en outre, un limiteur de courant, contribuant à produire un courant de charge à partir d'une énergie électrique disponible sur le bus pour une accumulation dans la réserve d'énergie, et tel que le courant de charge, fourni instantanément à la réserve d'énergie lors de l'accumulation, augmente avec la tension disponible sur le bus.

L'invention sera mieux comprise, grâce à la description ci-après, qui se rapporte à des modes de réalisation préférés et à leurs avantages, donnés à titre d'exemples non limitatifs, et expliqués avec référence aux dessins schématiques annexés, dans lesquels :
- la figure 1 est une vue schématique d'un module domotique ;
- la figure 2 illustre le schéma électrique d'un limiteur de courant utilisé dans un mode de réalisation de l'invention.

L'invention a donc tout d'abord pour objet un procédé d'alimentation électrique d'un module domotique 1, comprenant un point de connexion 2 à un réseau filaire d'information bus, une réserve d'énergie 6 électrique rechargeable pour son fonctionnement ainsi qu'un ensemble d'éléments consommateurs électriques, ladite alimentation électrique se faisant à partir du bus, ledit procédé comprenant
une étape consistant essentiellement à fournir de l'énergie électrique pour le fonctionnement du module domotique 1 ainsi qu'
une étape consistant essentiellement à produire un courant de charge à partir d'une énergie électrique disponible sur le bus pour une accumulation dans la réserve d'énergie 6, ladite réserve fournissant ultérieurement tout ou partie de l'énergie nécessaire au fonctionnement du module domotique 1.

Les éléments consommateurs électriques peuvent être notamment une unité de traitement 3, une interface homme machine 4 pour le contrôle du module par un utilisateur et/ou pour indiquer son état de fonctionnement, ainsi qu'au moins un relais 5 piloté par l'unité de traitement 3.

Le point de connexion 2 permet le raccordement au bus domotique en vue de la circulation d'information, en entrée et/ou en sortie du module domotique 1, ainsi que de la fourniture d'énergie électrique, qui peut être à destination des éléments consommateurs électriques du module domotique 1 cités plus haut, ou de la réserve d'énergie 6. L'unité de traitement 3 prend préférentiellement la forme d'un processeur numérique, l'interface homme machine 4 celle d'un ensemble de LED, diodes électroluminescentes, dont l'état change en fonction de celui de l'entrée ou de la sortie associée, voire d'un écran digital sur lequel de multiples informations peuvent être affichées. L'interface homme machine 4 peut donc servir à renvoyer un signal, comme un signal d'état grâce à une lumière, mais aussi à recevoir un signal ou une instruction, comme avec une télécommande ou via l'action sur des boutons poussoirs ou zones tactiles d'un écran digital.

L'énergie électrique que le module domotique 1 extrait du bus est donc répartie entre, d'une part, les besoins liés au fonctionnement propre du module domotique 1, comme le pilotage d'un ou plusieurs relais 5, les calculs de l'unité de traitement 3, la signalisation via l'interface homme machine 4, etc., et, d'autre part, ce qui est fourni à la réserve d'énergie 6. L'énergie totale extraite instantanément du bus domotique est donc soit utilisée instantanément par les éléments consommateurs électriques soit stockée.

Outre ce procédé d'alimentation électrique, la mise en oeuvre du module domotique 1 peut aussi s'accompagner d'une étape d'échange, à savoir émission ou réception, d'instruction véhiculée sur le bus grâce au point de connexion 2, ou encore de pilotage en conséquence du au moins un relais 5 grâce à l'unité de traitement 3.

Selon l'invention, le courant de charge, fourni instantanément à la réserve d'énergie 6 lors de l'accumulation, augmente avec la tension disponible sur le bus. Cela permet de maximiser en permanence l'énergie fournie à la réserve d'énergie 6 lors de l'accumulation. La tension disponible sur le bus est la tension entre les bornes du module domotique 1, connectées au bus domotique.

En effet, dans les procédés d'alimentation connus de l'art antérieur, le courant de charge est fixe, et tel que le cumul éventuel de ce courant de charge et du courant nécessaire au fonctionnement simultané de tous les autres éléments consommateurs électriques du module domotique 1 est possible et n'altère pas le bus, et ce même si la tension disponible sur le bus à l'endroit où se trouve le module domotique 1 est la plus faible. L'invention propose au contraire d'ajuster le courant de charge à l'énergie qui peut effectivement être puisée du bus. Ainsi, plus la tension disponible sur le bus est élevée, plus le courant de charge sera élevé. Inversement, moins la tension de bus est élevée, moins le courant de charge sera élevé lui aussi. Cela permet donc d'optimiser dans tous les cas le courant de charge, de sorte à le rendre aussi élevé que possible.

L'énergie fournie à la réserve d'énergie 6 est donc ajustée en permanence aux capacités du réseau filaire bus, et non définie par construction à la valeur maximale qu'elle doit avoir pour ne pas créer de perturbation sur le bus même si les consommations des autres éléments du module domotique 1 sont simultanément maximales.

Bien entendu, pour déterminer le courant de charge, il s'agit de tenir compte de la tension moyenne du bus, à partir de laquelle les variations sont représentatives d'une information codée. Le courant de charge augmente donc avec la tension moyenne du bus à l'endroit de connexion du module domotique 1.

Cet ajustement du courant de recharge peut se faire de façon logique, en utilisant des composants contrôlés sur la base d'une mesure de tension ainsi que d'un calcul déterminant le courant maximal qui peut être dévolu à la recharge de la réserve d'énergie 6 sans dégrader le bus.

Toutefois, préférentiellement, le courant électrique fourni à la réserve d'énergie 6 lors de l'accumulation est ajusté naturellement, grâce aux caractéristiques intrinsèques des composants d'un limiteur de courant 8 que comprend le module domotique 1, le limiteur de courant 8 formant ainsi un circuit analogique. Le courant de charge, apporté à la réserve d'énergie 6, n'est alors pas le fruit d'une logique de calcul appliquée à des données relevées sur le bus et/ou ailleurs dans le module domotique 1, ce qui permet de fiabiliser le traitement et d'en réduire la complexité.

Selon une caractéristique additionnelle possible du procédé, il comprend une étape consistant essentiellement à produire un courant de contrôle image de la tension disponible sur le bus, de sorte que le courant de charge augmente lorsque le courant de contrôle augmente, et inversement. Les deux courants peuvent par exemple être proportionnels. Comme il sera encore décrit plus loin, l'énergie que peut fournir le bus domotique est quantifiée au niveau d'une borne dite entrée de contrôle 13, par une mesure de la tension filtrée du bus, en amont des convertisseurs continus du module domotique 1, et toute consommation sur cette entrée se répercute négativement sur le bus. Il est donc avantageux, d'une part, d'obtenir une image de la tension bus disponible, et ce en amont des convertisseurs continus, et, d'autre part, de puiser le courant de charge en aval desdits convertisseurs, au niveau d'une borne dite entrée de puissance 12.

L'image de la tension bus est donc obtenue en générant un courant de contrôle dans une branche dite branche de contrôle 16 aux bornes de laquelle se retrouve la tension du bus filtrée grâce à l'entrée de contrôle 13. Ce courant de contrôle augmente naturellement avec la tension bus, et inversement.

Le courant de charge est, quant à lui, extrait de l'entrée de puissance 12, de façon proportionnelle au courant de contrôle. Ainsi, l'augmentation de la tension bus aura pour effet d'augmenter le courant de contrôle, ce qui aura alors à son tour pour effet d'augmenter le courant de charge, et inversement. L'augmentation ou la diminution de la tension de bus se répercutera donc au niveau du courant de charge.

Selon une autre caractéristique additionnelle possible du procédé, il comprend une étape consistant à produire un courant de puissance, image du courant de contrôle et circulant dans une branche entre l'entrée de puissance 12 et la masse, dite branche de puissance 17, aux bornes de laquelle est aussi appliquée la tension de bus, mais reprise en aval d'un convertisseur continu à rendement élevé. Comme il sera décrit plus loin, le courant de puissance est obtenu par copie du courant de contrôle à l'aide d'un double miroir 9 de courant, le courant de charge étant ensuite sensiblement proportionnel au courant de puissance. Préférentiellement, le courant de charge est généré par multiplication du courant de puissance.

Le recours à deux copies successives est nécessaire pour, d'une part, réaliser une source de courant proportionnelle à la tension de bus filtrée, et, d'autre part, multiplier le courant pour ne pas charger l'entrée de contrôle 13 et avoir une référence au voltage de l'entrée de puissance 12.

Le module domotique 1 peut être conçu et dimensionné de sorte que même lorsque le fonctionnement du module domotique 1 nécessite le plus d'énergie électrique, le courant de charge n'altère pas le fonctionnement du bus, c'est-à-dire que le courant total extrait du bus reste dans une limite autorisée. Un des inconvénients d'une telle conception est toutefois que, dès lors que le fonctionnement du module domotique 1 consommera moins d'énergie, le courant de charge ne sera plus optimum, puisqu'il pourrait être augmenté sans créer de perturbation du bus.

Ainsi, dans des modes de réalisation particuliers, le courant de charge est augmenté à mesure que diminuent d'autres consommations d'énergie électrique dans le module domotique 1, en particulier celles d'au moins l'un des éléments consommateurs électriques, comme l'interface homme machine 4, l'unité de traitement 3, le au moins un relais 5, de sorte à ajuster de façon dynamique le courant de charge fourni à la réserve d'énergie électrique 6 à l'énergie consommée instantanément pour le fonctionnement du module domotique 1.

L'intensité fournie à la réserve d'énergie 6 n'est donc pas constante, mais adaptée simultanément et de façon synchronisée à la consommation des autres éléments consommateurs électriques du module, ce qui permet de fixer en permanence au maximum le courant de charge. Le module puise donc en permanence l'énergie électrique maximale qu'il peut du réseau filaire bus sans en altérer le fonctionnement, cette énergie étant ensuite répartie entre la recharge et les différents éléments consommables électriques du module qui en ont besoin pour son fonctionnement : l'unité de traitement 3, l'interface homme machine 4, le point de connexion 2, les relais 5, etc.

Ainsi, le courant de charge fourni à la réserve d'énergie 6 est en permanence le plus élevé possible sans nuire au fonctionnement du reste du module domotique 1 ni perturber le bus. L'énergie disponible sur le réseau, qui peut varier, récupérée par le point de connexion 2, est ainsi répartie instantanément et totalement entre la réserve d'énergie 6, d'une part, et les autres éléments consommateurs électriques du module domotique 1, d'autre part. Le courant de charge fourni à la réserve d'énergie 6 n'est donc pas fixe, mais représente en permanence la partie de l'énergie tirée du bus qui n'est pas utilisée par les autres éléments consommateurs électriques du module pour leur fonctionnement.

Selon une caractéristique additionnelle possible, le courant de charge est modifié en changeant le facteur de multiplication entre le courant de puissance et le courant de charge, ce qui peut, par exemple, être réalisé en utilisant un ensemble amplificateur à ratio variable, notamment par contrôle de résistances qu'il comprend, plutôt qu'un ensemble amplificateur 15 de courant décrit plus loin dont la résistance est soit dans le circuit soit shuntée.

Selon une autre caractéristique additionnelle possible, le courant de charge est modifié en changeant le facteur de multiplication entre la tension disponible sur le bus et le courant de contrôle. Le moyen de calibrage 10 décrit ci-dessous réalise cette fonction.

Ainsi, comme le courant de charge est contrôlé, pour l'adapter à la tension bus ainsi qu'à la consommation des autres éléments électriques du module domotique 1, il est envisageable que lors du démarrage du module domotique 1, l'unité de traitement 3 permette uniquement la recharge de la réserve d'énergie 6, et y consacre ainsi toute l'énergie électrique que le point de connexion 2 peut extraire du réseau filaire bus. Dans ce cas, l'interface homme machine 4 reste donc éteinte, et l'état des relais 5 ne peut être modifié. Toute l'énergie disponible sur le bus est donc consacrée à la recharge de la réserve d'énergie 6.

Comme le courant de charge est ajusté automatiquement à l'énergie disponible sur le bus, voire aussi à la consommation des autres éléments du module, la réserve d'énergie 6 sera alimentée avec le courant le plus élevé possible. Le démarrage du module est donc beaucoup plus rapide que si le courant de charge initiale de la réserve d'énergie 6 était fixe, et correspondait donc alors à une valeur fixée sur la base de la situation laissant le moins d'énergie pour la recharge. Ainsi, selon une caractéristique additionnelle possible, le courant de charge est augmenté jusqu'à représenter tout le courant qui peut être extrait du bus domotique, tout ou partie des autres éléments du module domotique 1 n'étant volontairement pas alimentés. La première charge est donc plus rapide et le module domotique 1 est plus rapidement fonctionnel.

L'invention a aussi pour objet un module domotique 1 comprenant un point de connexion 2 à un réseau filaire d'information bus, une réserve d'énergie 6 électrique rechargeable pour son fonctionnement ainsi qu'un ensemble d'éléments consommateurs électriques.

Selon l'invention, le module comprend, en outre, un limiteur de courant 8, contribuant à produire un courant de charge à partir d'une énergie électrique disponible sur le bus pour une accumulation dans la réserve d'énergie 6, et tel que le courant de charge, fourni instantanément à la réserve d'énergie 6 lors de l'accumulation, augmente avec la tension disponible sur le bus.

Le limiteur de courant 8 est donc un circuit monté entre, d'une part, le point de connexion 2, et, d'autre part, la réserve d'énergie 6. La réserve d'énergie 6 peut servir à alimenter tout ou partie des éléments consommateurs électriques du module domotique 1 : le point de connexion 2, l'unité de traitement 3, l'interface homme machine 4, le ou les relais 5, etc.

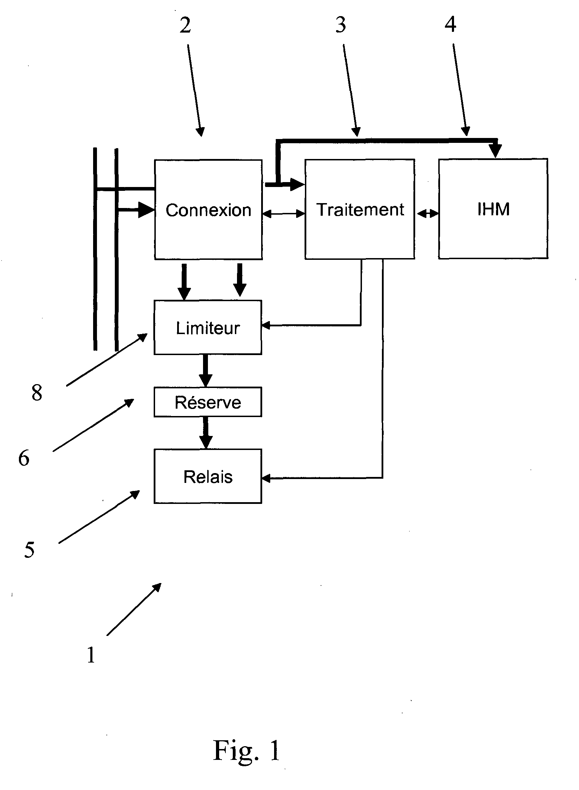

La figure 1 montre que le point de connexion 2 alimente, d'une part, l'unité de traitement 3 et l'interface homme machine 4, et, d'autre part, le limiteur de courant 8, de sorte que l'énergie nécessaire au fonctionnement du module domotique 1, en particulier de l'unité de traitement 3 et/ou de l'interface homme machine 4, est prélevée en amont de l'alimentation en énergie du limiteur de courant 8 par le point de connexion 2.

Selon une caractéristique additionnelle possible, le limiteur de courant 8 comprend, d'une part, une branche de contrôle 16, en aval d'une entrée de contrôle 13, où est appliquée la tension de bus filtrée, pour produire un courant de contrôle, image de la tension disponible sur le bus, et, d'autre part, une branche de charge 18, en aval d'une entrée de puissance 12, pour le courant de charge et dans laquelle se trouve une sortie 14 à laquelle la réserve d'énergie 6 est reliée, notamment une entrée de puissance 12 en aval d'un convertisseur continu à rendement élevé.

Le limiteur de courant 8 a, comme bornes d'entrées, une entrée de puissance 12, grâce à laquelle l'énergie électrique peut être tirée du bus domotique, une entrée de contrôle 13, grâce à laquelle est obtenue une image de la tension de bus disponible, et éventuellement une entrée de commande 19 d'un moyen de calibrage 10, à laquelle est branchée, en amont, l'unité de traitement 3. Le limiteur de courant 8 a, comme borne de sortie, la sortie 14 de recharge de la réserve d'énergie 6 à laquelle elle est branchée, ainsi qu'éventuellement une borne de renvoi 7 permettant de renvoyer à l'unité de traitement 3 un signal représentatif de l'état de charge de la réserve d'énergie 6 et/ou du courant de recharge.

Le courant de contrôle, image de la tension bus et donc de l'énergie que le bus peut fournir, circule dans la branche de contrôle 16, le courant de charge, à destination de la réserve d'énergie 6 circulant dans la branche de charge 18.

Selon une caractéristique additionnelle possible, le limiteur de courant 8 comprend une branche de puissance 17, en aval de l'entrée de puissance 12, pour produire un courant de puissance, image du courant de contrôle. Pour créer, dans la branche de puissance 17, une image du courant circulant dans la branche de contrôle 16, et selon une caractéristique additionnelle possible, la branche de contrôle 16 et la branche de puissance 17 sont reliées par un double miroir 9 de courant pour que s'installe dans la branche de puissance 17 un courant de puissance égal au courant de contrôle circulant dans la branche de contrôle 16.

Le double miroir 9 prend par exemple la forme d'une paire de couple de transistors montés en série, les deux couples étant montés en parallèle l'un de l'autre, et branchés en aval de l'entrée de puissance 12, l'un dans la branche de contrôle 16, l'autre dans la branche de puissance 17.

Selon une caractéristique additionnelle possible du module, il présente un ensemble amplificateur 15, pour générer un courant de charge par multiplication du courant de puissance, comprenant notamment, tant dans la branche de charge 18 que dans la branche de puissance 17, un montage en série d'une résistance 22 et d'un transistor 23, les deux transistors 23 étant montés en miroir.

Dans des modes de réalisation particuliers, le limiteur de courant 8 présente, monté en série dans la branche de contrôle 16, voire dans la ou une branche de puissance 17, au moins un ensemble résistif contrôlé formant moyen de calibrage 10, comprenant notamment une résistance 21 et un transistor 20 pouvant la shunter, de sorte que, grâce à ce moyen de calibrage 10, le courant de charge est modifié en changeant le facteur de multiplication entre la tension disponible sur le bus et le courant de contrôle, voire aussi le courant de puissance.

Dans d'autres modes de réalisation particuliers, le module domotique 1 présente, monté en série dans la branche de contrôle 16, et/ou dans la ou une branche de puissance 17, un étage à résistance variable formant moyen de calibrage 10, essentiellement constitué d'un circuit analogique dont la résistance électrique change en fonction des courants circulant par ailleurs dans le module domotique 1.

Selon une caractéristique additionnelle possible, le limiteur de courant 8 comprend un pont diviseur 11 permettant de renvoyer à l'unité de traitement 3 un signal représentant l'énergie stockée dans la réserve d'énergie 6, en particulier un pont diviseur 11 sous la forme d'une paire de résistances entre lesquelles l'unité de traitement 3 est connectée, grâce à une borne de renvoi 7, ladite paire étant branchée entre la masse et la sortie 14 du limiteur de courant 8. L'information renvoyée correspond en fait à la tension aux bornes de la réserve d'énergie 6, cette tension étant représentative de l'énergie stockée dans ladite réserve puisque ces deux grandeurs sont reliées par une formule mathématique.

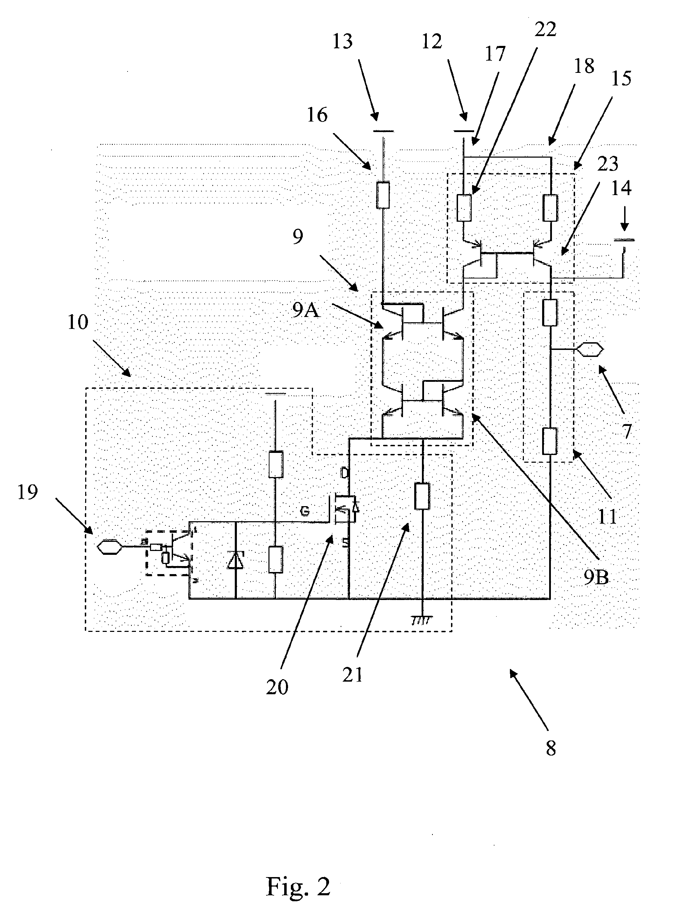

Le module domotique 1 peut donc par exemple être muni d'un circuit limiteur de courant 8 comme celui illustré à la figure 2, dont le fonctionnement est détaillé ci-dessous.

Ce circuit, permettant d'extraire de l'énergie électrique du bus domotique et de le fournir à une réserve d'énergie 6, sous forme d'une capacité, et préférentiellement deux, présente donc les deux bornes d'entrée, à savoir une entrée de contrôle 13, pour le côté contrôle, et une entrée de puissance 12, pour le côté puissance. Le côté contrôle permet de fournir l'information nécessaire à la régulation du courant envoyé dans la réserve d'énergie 6 et effectuée par le limiteur de courant 8, le côté puissance permettant l'extraction proprement dite d'énergie depuis le bus domotique.

Le limiteur de courant 8 présente ainsi une entrée de puissance 12, issue d'un convertisseur continu à rendement élevé que comprend le module, et une entrée de contrôle 13, image de la tension moyenne du bus filaire obtenue après un filtre, reliées toutes les deux au point de connexion 2 ainsi qu'une sortie 14 reliée à la réserve d'énergie 6, et comprend, branché en aval de l'entrée de contrôle 13, un double miroir 9 de courant et, en aval de l'entrée de puissance 12, un ensemble amplificateur 15 de courant.

L'entrée de contrôle 13 représente l'image de la tension bus filtrée, et y puiser de l'énergie peut dégrader le bus, puisqu'elle est connectée à l'amont des convertisseurs continus que présente le module domotique 1. L'entrée de puissance 12 peut, elle, être utilisée pour fournir de l'énergie électrique sans perturber le bus. Ainsi, le limiteur de courant 8, circuit d'alimentation de la réserve d'énergie 6, est connecté, d'une part, à une entrée de contrôle 13, qui permet d'obtenir une image de la tension bus disponible, et donc de l'énergie que le module domotique 1 pourra en tirer, et, d'autre part, à une entrée de puissance 12, à partir de laquelle l'extraction d'énergie proprement dite pourra se faire.

Le courant s'écoulant dans la branche de contrôle 16, entre l'entrée de contrôle 13 et la masse, est recopié par un double miroir 9 de courant, dans la branche de puissance 17, entre l'entrée de puissance 12 et la masse. Ce double miroir 9 de courant est essentiellement constitué de deux miroirs de courant successifs, un miroir amont 9A, du côté des entrées, et un miroir aval 9B, du côté de la masse, chaque miroir étant essentiellement constitué de deux transistors dont les bases sont reliées, l'un de ces deux transistors étant monté dans la branche de contrôle 16, l'autre étant monté dans la branche de puissance 17, les collecteurs étant du côté de l'entrée respective, les émetteurs du côté de la masse. Pour le miroir amont 9A, le collecteur du transistor de la branche de contrôle alimente directement les bases de ses deux transistors. Pour le miroir aval 9B, c'est le collecteur du transistor de la branche de puissance 17 qui alimente directement les bases de ses deux transistors.

Le double miroir 9 de courant permet donc de faire circuler dans la branche de puissance 17, pour l'alimentation de puissance, un courant égal à celui que fait circuler dans la branche de contrôle 16 la tension, obtenue après un filtrage de la tension présente sur le bus et appliquée à l'entrée de contrôle 13, ce qui permet ainsi de créer une image du courant que peut fournir le bus au module domotique 1.

Le recours à deux miroirs successifs, respectivement un miroir amont 9A, côté entrées, et un miroir aval 9B, côté masse, garantit une bonne stabilité en température de la copie, dans la branche de puissance 17, du courant circulant dans la branche de contrôle 16. En effet, lorsque la température augmente, le gain des différents transistors augmente, augmentant le courant dans la branche de contrôle 16, le transistor du miroir aval 9B, côté entrée de contrôle 13, conduisant alors davantage, ce qui a pour effet de réduire alors le courant dans la base du transistor côté entrée de puissance 12 du miroir amont 9A. Cette réduction de courant s'accompagne de la réduction du courant circulant dans la branche de puissance 17.

Le transistor côté branche de contrôle 16 du miroir amont 9A, permet de maintenir sensiblement le même potentiel entre, d'une part, le collecteur, et, d'autre part, la base, du transistor côté branche de contrôle 17 dans le miroir aval 9B. Le courant de base de ce transistor est donc réduit de façon significative, limitant ainsi l'effet Early et améliorant en conséquence la recopie du courant du côté contrôle vers le côté puissance, puisque le courant de collecteur de ce transistor n'est alors que peu modifié par les variations de la tension entre son collecteur et son émetteur.

L'utilisation d'une succession de deux miroirs pour copier le courant que peut générer la tension bus présente à l'entrée de contrôle 13 améliore donc la qualité de cette reproduction dans la branche de puissance 17, la rendant moins sensible à la température et/ou aux variations de tension.

En aval de ce double miroir 9 de courant et jusqu'à la masse sont branchés, d'une part, une résistance 21 électrique, et, d'autre part, un transistor MOS 20 qui permet de la shunter, ces deux éléments formant des composants du moyen de calibrage 10. Ainsi, lorsque le transistor MOS 20 conduit, la résistance 21 électrique est shuntée, ce qui a pour effet d'augmenter le courant circulant dans la branche de contrôle 16, et par conséquent, grâce au double miroir 9, d'augmenter aussi le courant circulant dans la branche de puissance 17 et la branche de charge 18. Le transistor MOS 20 est placé de sorte que sa grille soit en aval d'un transistor de commande, piloté par l'unité de traitement 3, et d'une borne reprenant le potentiel de l'entrée de puissance 12. Son drain est placé directement en aval du double miroir 9, sa source étant reliée à la masse.

Dès lors que le transistor MOS 20 est piloté pour shunter la résistance 21, le courant augmente entre la masse et tant l'entrée de contrôle 13 que l'entrée de puissance 12, ce qui aura pour effet d'augmenter le courant de charge envoyé dans la réserve d'énergie 6, puisque ce dernier est obtenu par amplification du courant de puissance circulant, côté puissance, dans la branche du double miroir 9 reliée à l'entrée de puissance 12, à savoir la branche de puissance 17.

Par extension, il est alors possible de créer une forme de délestage entre les différents éléments du module domotique 1. Par exemple, au démarrage du module domotique 1, ou, de façon générale, lorsque la réserve d'énergie 6 est très peu ou pas du tout chargée, le programme de contrôle du module domotique 1 peut prévoir que seule la recharge de la réserve d'énergie 6 est réalisée, toute l'énergie extraite du bus domotique y étant envoyée. Dans ce cas, le transistor MOS 20 est piloté de sorte à shunter la résistance 21, ce qui aura l'effet décrit ci-dessus d'augmenter le courant circulant dans la branche de contrôle 16, d'augmenter ainsi sa copie dans la branche de puissance 17, et d'augmenter par conséquence le courant de charge envoyé vers la réserve d'énergie 6, obtenu par l'amplification qui sera décrite ci-dessous.

Concernant l'amplification du courant circulant côté puissance, l'entrée de puissance 12 est reliée à la masse par deux branches, la première, branche de puissance 17, circulant dans le double miroir 9 de courant décrit ci-dessus, la deuxième, branche de charge 18, étant reliée à la sortie 14, borne de connexion de la réserve d'énergie 6. Le courant circulant dans la branche de charge 18 est obtenu par amplification du courant circulant dans la branche de puissance 17. Cette amplification est réalisée par un ensemble amplificateur 15, sous la forme de deux résistances 22 et d'un ensemble de transistors 23, ce dernier étant formé de deux transistors montés en miroir, dont les bases, reliées entre elles, sont aussi montées en amont du double miroir 9 de courant, au niveau de la branche de puissance 17. Un transistor de l'ensemble de transistors 23 est donc en amont du double miroir 9 de courant, dans la branche de puissance 17, un autre transistor de l'ensemble de transistors 23 étant monté dans la branche de charge 18 entre, d'une part, l'entrée de puissance 12 et la sortie 14, borne de connexion de la réserve d'énergie 6. L'ensemble amplificateur 15 permet donc de faire circuler dans la branche de charge 18 un courant de charge destiné à la réserve d'énergie 6 et qui est une multiplication du courant circulant dans la branche de puissance 17.

Le courant fourni à la réserve d'énergie 6, par la sortie 14, est ainsi obtenu par amplification du courant de puissance circulant dans la branche de puissance 17 traversant le double miroir 9 de courant entre, d'une part, l'entrée de puissance 12 et la masse. Cette branche est parcourue par un courant égal à celui circulant dans la branche de contrôle 16 traversant le double miroir 9 entre, d'une part, l'entrée de contrôle 13, et la masse, et dépendant donc naturellement de la tension présente à ladite entrée de contrôle 13, de sorte que ce courant augmente lorsque cette tension augmente. Une autre façon d'augmenter le courant fourni aux réserves d'énergie 6 est, comme il a déjà été dit, de shunter la résistance 21 du moyen de calibrage 10.

Dans le mode de réalisation illustré dans la figure 2, le moyen de calibrage 10 repose essentiellement sur un transistor MOS 20 et sur une résistance 21 qu'il permet de shunter. Ainsi, si cette résistance 21 est shuntée, le courant de charge augmentera avec le courant disponible sur le bus dans une fenêtre de valeurs plus élevées que dans le cas contraire. Un tel moyen de calibrage 10 permet donc de faire varier le courant de charge envoyé à la réserve d'énergie 6 dans deux fenêtres différentes, selon l'état du transistor MOS 20. Ainsi, le moyen de calibrage 10 peut permettre d'ajuster le courant de charge en fonction d'autres critères que simplement l'énergie disponible sur le bus domotique, et préférentiellement en fonction de la consommation des autres éléments du module domotique 1, et ce en pilotant l'état du transistor MOS 20 en fonction de ces autres critères.

Dans des modes de réalisation plus élaborés, le moyen de calibrage 10 peut permettre un ajustement du courant de charge plus fin que par ces deux fenêtres de variations en fonction de l'énergie disponible sur le bus, et ce en contrôlant de façon plus fine la résistance présente entre le double miroir 9 de courant et la masse que par une logique binaire du type résistance 21 shuntée ou non, voire en la contrôlant de façon continue.

En particulier, le moyen de calibrage 10 peut comprendre une cascade de montages résistifs, comprenant chacun un transistor 20 et une résistance 21 qu'il peut shunter. Shunter successivement chaque résistance 21 permet d'augmenter progressivement les valeurs de la fenêtre dans laquelle évolue le courant de contrôle image de la tension bus et donc aussi le courant de charge en fonction de l'énergie présente sur le bus. Là encore, les différents transistors peuvent alors être pilotés en fonction de la consommation observée pour l'interface homme machine 4, le ou les relais 5, l'unité de traitement 3, ou d'autres éléments consommateurs électriques du module domotique 1.

Alternativement, le moyen de calibrage 10 peut être un montage analogique, grâce auquel la résistance entre le double miroir 9 de courant et la masse varie de façon continue en fonction du courant consommé par ailleurs dans le module domotique 1. Dans ce cas, il n'est plus nécessaire de commander de façon logique un ou plusieurs transistors MOS 20, en fonction d'une consommation relevée par ailleurs.

Enfin, un pont diviseur 11 à base de résistances, branché entre la borne de sortie 14 et la masse, permet de renvoyer au microcontrôleur par une borne de renvoi 7 un signal représentatif de la tension présente à la borne de sortie 14, et donc de l'énergie accumulée dans la réserve d'énergie 6. Il est donc possible à l'unité de traitement 3 de tenir compte de l'énergie accumulée pour adapter son pilotage des éléments électriques du module domotique 1, et en particulier de l'au moins un éventuel relais 5 ou de l'interface homme machine 4, diodes ou écran.

Bien entendu, l'invention n'est pas limitée au mode de réalisation décrit et représenté aux dessins annexés. Des modifications restent possibles, notamment du point de vue de la constitution des divers éléments, par combinaison différente de tout ou partie des caractéristiques décrites ci-dessus, ou par substitution d'équivalents techniques, sans sortir pour autant du domaine de protection de l'invention.

## Revendications

1. Procédé d'alimentation électrique d'un module domotique (1), comprenant un point de connexion (2) à un réseau filaire d'information bus, une réserve d'énergie (6) électrique rechargeable pour son fonctionnement ainsi qu'un ensemble d'éléments consommateurs électriques, ladite alimentation électrique se faisant à partir du bus, ledit procédé comprenant
une étape consistant essentiellement à fournir de l'énergie électrique pour le fonctionnement du module domotique (1) ainsi qu'
une étape consistant essentiellement à produire un courant de charge à partir d'une énergie électrique disponible sur le bus pour une accumulation dans la réserve d'énergie (6), ladite réserve fournissant ultérieurement tout ou partie de l'énergie nécessaire au fonctionnement du module domotique (1),
procédé **caractérisé en ce que**
le courant de charge, fourni instantanément à la réserve d'énergie (6) lors de l'accumulation, augmente avec la tension disponible sur le bus.

2. Procédé selon la revendication 1, **caractérisé en ce** que
il comprend une étape consistant essentiellement à produire un courant de contrôle, image de la tension disponible sur le bus, de sorte que le courant de charge augmente lorsque le courant de contrôle augmente, et inversement.

3. Procédé selon la revendication 2, **caractérisé en ce** que
il comprend une étape consistant à produire un courant de puissance, image du courant de contrôle.

4. Procédé selon la revendication 3, **caractérisé en ce que** le courant de charge est généré par multiplication du courant de puissance.

5. Procédé selon l'une quelconque des revendications 1 à 4, **caractérisé en ce que** le courant de charge est augmenté à mesure que diminuent d'autres consommations d'énergie électrique dans le module domotique (1).

6. Procédé selon la revendication 4 et selon la revendication 5, **caractérisé en ce que**
le courant de charge est modifié en changeant le facteur de multiplication entre le courant de puissance et le courant de charge.

7. Procédé selon l'une quelconque des revendications 5 ou 6, **caractérisé en ce que**
le courant de charge est modifié en changeant le facteur de multiplication entre la tension disponible sur le bus et le courant de contrôle.

8. Module domotique (1) comprenant un point de connexion (2) à un réseau filaire d'information bus, une réserve d'énergie (6) électrique rechargeable pour son fonctionnement ainsi qu'un ensemble d'éléments consommateurs électriques,
module **caractérisé en ce que**
il comprend, en outre, un limiteur de courant (8), contribuant à produire un courant de charge à partir d'une énergie électrique disponible sur le bus pour une accumulation dans la réserve d'énergie (6), et tel que le courant de charge, fourni instantanément à la réserve d'énergie (6) lors de l'accumulation, augmente avec la tension disponible sur le bus.

9. Module domotique (1) selon la revendication 8, **caractérisé** en ce que
le limiteur de courant (8) comprend, d'une part, une branche de contrôle (16), en aval d'une entrée de contrôle (13), où est appliquée la tension de bus filtrée, pour produire un courant de contrôle, image de la tension disponible sur le bus, et, d'autre part, une branche de charge (18), en aval d'une entrée de puissance (12), pour le courant de charge et dans laquelle se trouve une sortie (14) à laquelle la réserve d'énergie (6) est reliée.

10. Module domotique (1) selon la revendication 9, **caractérisé** en ce que
le limiteur de courant (8) comprend une branche de puissance (17), en aval de l'entrée de puissance (12), pour produire un courant de puissance, image du courant de contrôle.

11. Module domotique (1) selon la revendication 10, **caractérisé** en ce que
la branche de contrôle (16) et la branche de puissance (17) sont reliées par un double miroir (9) de courant pour que s'installe dans la branche de puissance (17) un courant de puissance égal au courant de contrôle circulant dans la branche de contrôle (16).

12. Module domotique (1) selon l'une quelconque des revendications 10 ou 11, **caractérisé en ce** que
il présente un ensemble amplificateur (15), pour générer un courant de charge par multiplication du courant de puissance.

13. Module domotique selon l'une quelconque des revendications 9 à 12, **caractérisé en ce** que
il présente, monté en série dans la branche de contrôle (16), voire dans la ou une branche de puissance (17), au moins un ensemble résistif contrôlé formant moyen de calibrage (10).

14. Module domotique selon l'une quelconque des revendications 9 à 12, **caractérisé en ce** que
il présente, monté en série dans la branche de contrôle (16), et/ou dans la ou une branche de puissance (17), un étage à résistance variable formant moyen de calibrage (10), essentiellement constitué d'un circuit analogique dont la résistance électrique change en fonction des courants circulant par ailleurs dans le module domotique (1).

15. Module domotique (1) selon l'une quelconque des revendications 8 à 14, **caractérisé en ce** que
le limiteur de courant (8) comprend un pont diviseur (11) permettant de renvoyer à l'unité de traitement (3) un signal représentant l'énergie stockée dans la réserve d'énergie (6).

## Patentansprüche

1. Verfahren zur elektrischen Versorgung eines haustechnischen Moduls (1), umfassend einen Anschlusspunkt (2) an ein verkabeltes Businformationsnetzwerk, einen wieder aufladbaren elektrischen Energievorrat (6) für dessen Funktion sowie eine Gruppe von elektrischen Verbraucherelementen, wobei die elektrische Versorgung über den Bus erfolgt, wobei das Verfahren umfasst:
einen Schritt, der im Wesentlichen darin besteht, elektrische Energie für den Betrieb des haustechnischen Moduls (1) zu liefern, ebenso wie
einen Schritt, der im Wesentlichen darin besteht, einen Ladestrom aus einer über den Bus verfügbaren elektrischen Energie für eine Anhäufung in der Energiereserve (6) zu erzeugen, wobei die Reserve anschließend ganz oder teilweise die notwendige Energie zum Betrieb des haustechnischen Geräts (1) liefert,
wobei das Verfahren **dadurch gekennzeichnet** ist, dass
der Ladestrom, der während der Anhäufung sofort an die Energiereserve (6) geliefert wird, mit der an dem Bus verfügbaren Spannung steigt.

2. Verfahren nach Anspruch 1, **dadurch gekennzeichnet, dass** es einen Schritt umfasst, der im Wesentlichen darin besteht, einen Regelstrom als Abbild der am Bus verfügbaren Spannung zu erzeugen, so dass der Ladestrom steigt, wenn der Regelstrom steigt und umgekehrt.

3. Verfahren nach Anspruch 2, **dadurch gekennzeichnet, dass** es einen Schritt umfasst, der darin besteht, einen Leistungsstrom als Abbild des Regelstroms zu erzeugen.

4. Verfahren nach Anspruch 3, **dadurch gekennzeichnet, dass** der Ladestrom durch Multiplikation des Leistungsstroms erzeugt wird.

5. Verfahren nach einem der Ansprüche 1 bis 4, **dadurch gekennzeichnet, dass** der Ladestrom in dem Maß steigt, wie andere elektrische Energieverbräuche in dem haustechnischen Modul (1) abnehmen.

6. Verfahren nach Anspruch 4 und nach Anspruch 5, **dadurch gekennzeichnet, dass** der Ladestrom durch Veränderung des Multiplikationsfaktors zwischen dem Leistungsstrom und dem Ladestrom verändert wird.

7. Verfahren nach einem der Ansprüche 5 oder 6, **dadurch gekennzeichnet, dass** der Ladestrom durch Veränderung des Multiplikationsfaktors zwischen der verfügbaren Spannung an dem Bus und dem Regelstrom verändert wird.

8. Haustechnisches Modul (1), umfassend einen Anschlusspunkt (2) an ein verkabeltes Businformationsnetzwerk, eine elektrische wieder aufladbare Energiereserve (6) für dessen Funktion sowie eine Gruppe von elektrischen Verbrauchselementen, wobei das Modul **dadurch gekennzeichnet** ist, dass es darüber hinaus einen Strombegrenzer (8) umfasst, der dazu beiträgt, ausgehend von einer an dem Bus verfügbaren elektrischen Energie einen Ladestrom für eine Anhäufung in der Energiereserve (6) zu erzeugen, und dass der Ladestrom, der bei der Anhäufung sofort an die Energiereserve (6) geliefert wird, mit der an dem Bus verfügbaren Spannung steigt.

9. Haustechnisches Modul (1) nach Anspruch 8, **dadurch gekennzeichnet, dass** der Strombegrenzer (8) einerseits einen Regelzweig (16) aufweist, der einem Regeleingang (13) nachgeschaltet ist, und an dem die gefilterte Busspannung angelegt ist, um einen Regelstrom als Abbild der an dem Bus verfügbaren Spannung zu produzieren, und andererseits einen Ladezweig (18) für den Ladestrom, der einem Leistungseingang (12) nachgestaltet ist und in dem sich ein Ausgang (14) befindet, mit dem die Energiereserve (6) verbunden ist.

10. Haustechnisches Modul (1) nach Anspruch 9, **dadurch gekennzeichnet, dass** der Strombegrenzer (8) einen Leistungszweig (17) umfasst, der dem Leistungseingang (12) nachgeschaltet ist, um einen Leistungsstrom als Abbild des Regelstroms zu erzeugen.

11. Haustechnisches Modul (1) nach Anspruch 10, **dadurch gekennzeichnet, dass** der Regelzweig (16) und der Leistungszweig (17) über einen doppelten Stromspiegel (9) verbunden sind, damit sich in dem Leistungszweig (17) ein Leistungsstrom einstellt, der gleich dem Regelstrom ist, der in dem Regelzweig (16) fließt.

12. Haustechnisches Modul (1) nach einem der Ansprüche 10 oder 11, **dadurch gekennzeichnet, dass** es eine Verstärkeranordnung (15) aufweist, um einen Ladestrom durch Multiplikation des Leistungsstroms zu erzeugen.

13. Haustechnisches Modul (1) nach einem der Ansprüche 9 bis 12, **dadurch gekennzeichnet, dass** es wenigstens eine ein Kalibrierungsmittel (10) bildende geregelte Widerstandsvorrichtung aufweist, die in dem Regelzweig (16) oder in dem oder in einem Leistungszweig (17) in Serie montiert ist.

14. Haustechnisches Modul (1) nach einem der Ansprüche 9 bis 12, **dadurch gekennzeichnet, dass** es eine ein Kalibrierungsmittel (10) bildende variable Widerstandsstufe aufweist, die in dem Regelzweig (16) und/oder in dem oder einem Leistungszweig (17) in Serie montiert ist, wobei die variable Widerstandsstufe im Wesentlichen aus einem analogen Schaltkreis gebildet ist, bei dem sich der elektrische Widerstand als Funktion des Stroms ändert, der darüber hinaus in dem haustechnischen Modul (1) fließt.

15. Haustechnisches Modul (1) nach einem der Ansprüche 8 bis 14, **dadurch gekennzeichnet, dass** der Strombegrenzer (8) eine Teilerbrücke (11) umfasst, die es ermöglicht, ein Signal an die Verarbeitungseinheit (3) zu schicken, welches die in der Energiereserve (6) gespeicherte Energie darstellt.

## Claims

1. Method for supplying electric power to a home automation module (1) comprising a connection point (2) to a wired bus information network, a rechargeable electric power reserve (6) for its operation and an assembly of electricity-consuming elements, said electric power supply being drawn from the bus, said method comprising
a step basically consisting in supplying electric power for the operation of the home automation module (1) and
a step basically consisting in producing a charging current from electric power available on the bus for accumulation in the power reserve (6), said reserve subsequently supplying all or part of the power required for the operation of the home automation module (1),
the method being **characterized in that**
the charging current, supplied instantaneously to the power reserve (6) upon accumulation, increases with the voltage available on the bus.

2. Method according to Claim 1, **characterized in that**
it comprises a step basically consisting in producing a control current, corresponding to the voltage available on the bus, so that the charging current increases when the control current increases, and vice versa.

3. Method according to Claim 2, **characterized in that**
it comprises a step consisting in producing a power current, corresponding to the control current.

4. Method according to Claim 3, **characterized in that** the charging current is generated by multiplication of the power current.

5. Method according to any one of Claims 1 to 4, **characterized in that** the charging current is increased as other electric power consumptions in the home automation module (1) decrease.

6. Method according to Claim 4 and according to Claim 5, **characterized in that**
the charging current is modified by changing the multiplication factor between the power current and the charging current.

7. Method according to any one of Claims 5 or 6, **characterized in that**
the charging current is modified by changing the multiplication factor between the voltage available on the bus and the control current.

8. Home automation module (1) comprising a connection point (2) to a wired bus information network, a rechargeable electric power reserve (6) for its operation and an assembly of electricity-consuming elements,
the module being **characterized in that**
it furthermore comprises a current limiter (8), helping to produce a charging current from electric power available on the bus for accumulation in the power reserve (6), and such that the charging current, supplied instantaneously to the power reserve (6) upon accumulation, increases with the voltage available on the bus.

9. Home automation module (1) according to Claim 8, **characterized in that**
the current limiter (8) comprises firstly a control arm (16), downstream of a control input (13), to which the filtered bus voltage is applied, in order to produce a control current, corresponding to the voltage available on the bus, and, secondly a charging arm (18), downstream of a power input (12), for the charging current and in which an output (14) is situated, to which the power reserve (6) is connected.

10. Home automation module (1) according to Claim 9, **characterized in that**
the current limiter (8) comprises a power arm (17), downstream of the power input (12), in order to produce a power current, corresponding to the control current.

11. Home automation module (1) according to Claim 10, **characterized in that**
the control arm (16) and the power arm (17) are connected by a double current mirror (9) so that a power current equal to the control current flowing through the control arm (16) is set up in the power arm (17).

12. Home automation module (1) according to any one of Claims 10 or 11, **characterized in that**
it has an amplifier assembly (15) in order to generate a charging current by multiplication of the power current.

13. Home automation module according to any one of Claims 9 to 12, **characterized in that**
it has, connected in series in the control arm (16), or even in the, or a, power arm (17), at least one controlled resistive assembly forming a calibrating means (10).

14. Home automation module according to any one of Claims 9 to 12, **characterized in that**
it has, connected in series in the control arm (16), and/or in the, or a, power arm (17), a variable-resistance stage forming a calibrating means (10), basically composed of an analogue circuit, the electrical resistance of which changes as a function of the currents also flowing through the home automation module (1).

15. Home automation module (1) according to any one of Claims 8 to 14, **characterized in that**
the current limiter (8) comprises a divider bridge (11) making it possible to return a signal representing the power stored in the power reserve (6) to the processing unit (3).
